# EUROPEAN PATENT APPLICATION

(11) **EP 3 872 769 A1**
(43) Date of publication of application: **01.09.2021**
(21) Application number: 20160044.2
(22) Date of filing: 28.02.2020
(51) Int. Cl.: G06T 19/00, G06T 15/04, G06T 17/00

(54) **METHOD, DEVICE AND MEDIUM FOR PROVIDING AN AUGMENTED-REALITY VISUALIZATION**

(71) Applicant: McKevitt, Gareth, 81671 München (DE)
(72) Inventor: McKevitt, Gareth, 81671 München (DE)
(74) Representative: Müller-Boré & Partner Patentanwälte PartG mbB

(57) **Abstract**

Summarizing the invention, a computer-implemented method for modifying a visualization of a three-dimensional environment on a display of a portable device by adding virtual content is provided. The method comprises performing, by the portable device, the following steps: - creating a three-dimensional model of the three-dimensional environment by: -- capturing data about the three-dimensional environment using one or more capturing devices; -- processing the captured data to create the three-dimensional model;- displaying the visualization of the three-dimensional environment on the display;
- generating camouflaging virtual content for an element of interest of the three-dimensional environment by: -- defining a masking region that covers at least the entirety of the element of interest as displayed; -- assigning a texture map to the masking region;
- modifying the visualization of the three-dimensional environment by applying the camouflaging virtual content to the visualization of the three-dimensional environment by using the three-dimensional model; wherein: the masking region and the texture map are such that, in the modified visualization of the three-dimensional environment, a boundary between the camouflaging virtual content and the visualization of the three-dimensional environment is substantially undetectable by the human eye.

## Description

### Technical Field

The following description relates to a method, a device and a medium for providing an augmented-reality visualization. In particular, a real environment is visualized on a display together with virtual content, wherein the virtual content is generated in real time and removes one or more parts of the real environment from the displayed scene, in that it masks/hides the one or more parts.

### Background

Virtual reality and augmented reality (AR) systems are widely known and belong to everyday use in consumer devices. The main difference between virtual reality and AR is that in a virtual reality system the user is immersed in an entirely virtual environment, while in an AR system virtual content is placed within a view of the real-world environment of the user.

A typical AR system comprises a camera, motion-sensing devices (also referred to as 'inertial sensors'), a processor and a display. The camera provides a video feed that is used to produce the background of the AR scene on the display as well as provide input data to an AR module that runs on the processor. These video data, combined with the data from the inertial sensors, are used to produce a three-dimensional (3D) model of the real environment. The processor then performs further processing steps, such as plane detection on the raw data points to determine where in the scene horizontal and / or vertical planes are located. Once a plane has been identified, the system can use it as a reference point for the placement of virtual content.

Placing virtual content refers to taking the 3D model of the real environment, e.g. retrieving it from memory, and rendering it within the context of the camera's field of view. In order to achieve a realistic appearance in the context of AR, the model must be rendered correctly in terms of position, size, and orientation based on the user's viewing position and the point at which the user placed the virtual content. This is done using the 3D model of the environment to determine the correct perspective projection for the present viewing position (in the following referred to also as point of view or viewing angle) of the camera. Accordingly, modelling the geometry of the real environment is of key importance for an AR system.

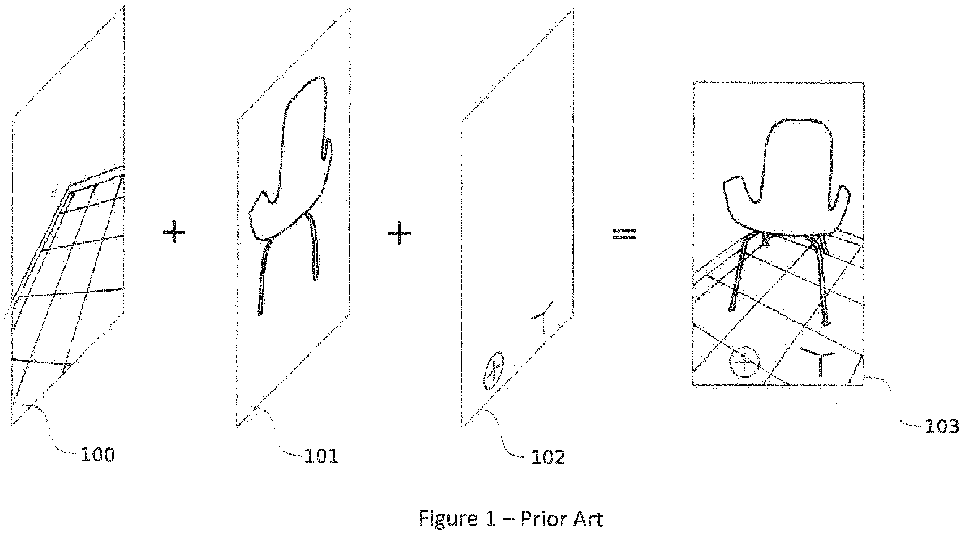

The AR scene on the display can be thought of as a series of layers, on each of which certain types of information are displayed. A simplified arrangement of such layers for a typical AR system is shown in Figure 1. The simplified layer arrangement comprises a background layer 100, which displays the images from the camera, a virtual content layer 101 that shows one or more 3D elements rendered into the scene, and a user interface layer 102 that contains controls for user interaction and feedback. These layers are then combined in a vertical stack 103 in the order shown: the bottom layer is the background layer and the other layers are overlaid on top of this layer.

In the simplified arrangement illustrated above, the virtual content layer will always occlude the background layer. This may represent an issue: when the virtual content is placed in the scene and the point of view of the camera is then changed, the virtual object may need to be obscured by a real world object, but this does not occur, as the real world object is in the background layer.

Further, conventional AR models are concerned only with the geometry of the environment, which is needed to place the virtual content. These models are generally not accurate visual models, i.e. accurately reproducing the appearance of the environment, since the environment is displayed using the video feed. In cases in which an accurate visual model of the environment is needed (e.g. creating a virtual copy of a monument for use in a virtual tour), typical approaches in scene modelling involve off-line processing of image and range data to create highly accurate models of an environment.

### Summary

It is an object of the invention to extend the capabilities of an existing AR system, wherein the AR system can be implemented as part of a portable device even with the extended capabilities.

The achievement of this object in accordance with the invention is set out in the independent claims. Further developments of the invention are the subject matter of the dependent claims.

It is a further object of the invention to simplify the visual modelling of a real environment for an AR system.

According to one aspect, a computer-implemented method for modifying a visualization of a three-dimensional environment on a display of a portable device by adding virtual content is provided. The method comprises performing, by the portable device, the following steps:
- creating a three-dimensional model of the three-dimensional environment by:
   -- capturing data about the three-dimensional environment using one or more capturing devices;
   -- processing the captured data to create the three-dimensional model;
- displaying the visualization of the three-dimensional environment on the display;
- generating camouflaging virtual content for an element of interest of the three-dimensional environment by:
   -- defining a masking region that covers at least the entirety of the element of interest as displayed;
   -- assigning a texture map to the masking region;
- modifying the visualization of the three-dimensional environment by applying the camouflaging virtual content to the visualization of the three-dimensional environment by using the three-dimensional model;
wherein:
the masking region and the texture map are such that, in the modified visualization of the three-dimensional environment, a boundary between the camouflaging virtual content and the visualization of the three-dimensional environment is substantially undetectable by the human eye.

The three-dimensional environment is a part of the real world, which may comprise an indoor and/or an outdoor space. The 3D environment may be the volume surrounding a user holding the portable device and may exemplarily be a room. Generally, the 3D environment may comprise a plurality of items, including a setting (e.g. walls, floor, sky...) and one or more objects against the setting.

The visualization of the 3D environment on the display is a rendering of the scene on a screen of the portable device. The portable device (also referred to as "mobile device") is a handheld computing device, such as a smartphone or a tablet.

The instantaneous visualization is relative to a specific point of view from which the 3D environment is observed. In particular, the point of view may be that of an image-recording device, e.g. a camera, that captures visual data, e.g. in the form of still images. These visual data are fed to the screen for displaying, usually after being processed by a processing unit. The display or screen, the image-recording device and the processing unit belong all to the portable device.

The ensemble of the instantaneous visualizations at different points in time, i.e. the plurality of still images, forms a video, wherein usually the point of view changes with time, e.g. when the image-recording device moves within the environment. In other words, observing the 3D environment via the image-recording device and the screen is a seamless experience comparable to observing the 3D environment with human eyes.

The real scene as captured by the image-recording device can be modified when shown on the display by introducing virtual content. In this disclosure "virtual content" refers to any element that is not actually present in the 3D environment at the moment in which the 3D environment is being observed through the image-recording device. In other words, the virtual content is not real and, thus, can only be seen on the screen but not in the real world. The virtual content is generated by a computing module, e.g. the processing unit, and is added to the visual data in order to provide an augmented view of the 3D environment.

The computer-generated virtual content and the captured visual data are combined when displaying the 3D environment, so that the presence of the virtual content alters the real scene of the 3D environment. The AR visualization is indeed a superposition of a background given by a live feed of images (i.e. the visualization of the 3D environment) and the virtual content. Accordingly, it can also be said that the method for modifying a visualization of a 3D environment on a display by adding virtual content is a method for generating an AR visualization of a 3D environment.

The method comprises a step of creating a 3D model of the 3D environment. The 3D model is the basis for the presentation of virtual content. The first sub-step of this step is capturing data about the 3D environment using one or more capturing devices of the portable device. In particular, the one or more capturing devices may include the image-recording device and one or more sensors, which include but are not limited to motion sensors (e.g. accelerometers, gyroscopes) and depth sensors. Accordingly, the captured data may comprise image data, such as pictures of the 3D environment, depth data indicating the distances of items of the 3D environment, and motion data about movements of the portable device (e.g. held by a user) within the 3D environment. Indeed, in order to provide an AR visualization, a map of the environment is built while keeping track of the location of an entity (e.g. the portable device) within it. This is conventionally referred to as SLAM, simultaneous localization and mapping.

Accordingly, in the second sub-step, the captured data are processed in order to create the 3D model of the 3D environment. The 3D model may be a mathematical representation of the 3D space comprising coordinates of a plurality of points with respect to a given coordinate system, e.g. the AR coordinate system, and information on how to connect the points in order to recreate the surfaces and volumes, e.g. in the form of geometric entities. The AR coordinate system may have its origin at the location of the device, e.g. at the moment in which the procedure for creating the geometric 3D model is started. It may be a Cartesian coordinate system or any other coordinate system.

The 3D model may be extracted from the captured data by using SLAM algorithms, which define 3D point clouds. The 3D point clouds are then processed to locate planes or predefined objects. The geometric model is the combination of points and the planes and surfaces identified using those points. The 3D model may be stored in a data storage, such as a memory of the portable device, a remote storage accessible via a storage network or a storage in the cloud.

The 3D model may be created by the portable device automatically, e.g. as soon as the capturing devices, which may be always on in the portable device, start capturing data, or may be created in response to a command input by a user of the portable device.

The method further comprises a step of displaying the visualization of the three-dimensional environment on the display. The image-recording device records images of the environment, which are then shown live on the display. Exemplarily, the display of the visualization may be triggered by a user input, e.g. opening a camera app on a smartphone.

The steps of creating the 3D model and displaying the visualization may be performed sequentially in any order or at least partially simultaneously. When performed simultaneously, the images used for the visualization of the 3D environment may be part of the captured data.

The method further comprises generating camouflaging virtual content for an element of interest of the three-dimensional environment. As mentioned above, the 3D environment may comprise a plurality of items including a setting and one or more objects. An element of interest is a part of the 3D environment that should be masked or hidden in the displayed visualization. The camouflaging virtual content makes the element of interest "invisible" in the AR visualization, as will be explained below.

The element of interest may comprise one or more items of the 3D environment, such as a single object (e.g. a vase), a plurality of objects, one or more parts of the setting (e.g. a wall) or a combination of any of the preceding items. The element of interest may be a continuous region of the 3D environment or may comprise disjointed regions. In one example, the 3D environment may be a living room and the element of interest may be a lamp that should be removed from the visualization of the room.

The element of interest may be chosen by a user or selected on the basis of predetermined criteria, such as colour or position of an object within the 3D environment. The criteria may also be set by a user. Exemplarily, the method comprises receiving a user input that selects the element of interest, e.g. by means of a touch screen showing the 3D environment on which the user can select the element of interest. Accordingly, the portable device may comprise an input unit and the input unit may be configured to receive a user input that selects the element of interest.

In particular, the user input may comprise a designation of only a part of the element of interest, e.g. by tapping a point within the element of interest, or a designation of the whole element of interest, e.g. by tracing the contour of the element of interest or filling in the area of the element of interest, and/or a designation of a bounding box surrounding the element of interest. The selection of the element of interest may involve the use of object recognition techniques.

As mentioned, the element of interest is to be camouflaged by the camouflaging virtual content in the modified or augmented visualization of the 3D environment. The virtual content may be subdivided into different classes according to how it has to be handled by the AR system. In particular, different classes may correspond to different occlusion properties of the displayed content. There may be *n* occlusion classes, wherein class zero refers to the background, i.e. the images of the 3D environment, which is not virtual content. The classes 1 to *n*-1 are used for virtual content, wherein the virtual content in the *(i+1)-th* class is set to occlude all the content belonging to the classes zero to *i* (for *i* that goes from 0 to *n* - 2), and the virtual content in the first class occludes only the background. Exemplarily, there may be three occlusions classes. The classes may be assigned by setting flags and/or by creating different visualization layers corresponding to the different classes, which are to be stacked one on top of the other in order to provide the AR visualization. For example, the flags may be set based on a position of the virtual content along the z-axis (assuming a positive z-axis pointing towards the portable device).

The camouflaging virtual content may be assigned to the first class, i.e. it may be configured to occlude only the background given by the images of the 3D environment. In this way, the camouflaging virtual content does not affect the visualization of other possible virtual content. In other words, the first class may be assigned to virtual content used for creating overlays that have the purpose of being superimposed on a part of the background image and completely covering some portion of the background image so that it is no longer visible.

In particular, generating the camouflaging virtual content comprises defining a masking region that covers at least the entirety of the element of interest as displayed.

The masking region may be a 2D or 3D region and its characteristics are such that, if the masking region is overlapped on the element of interest on the display, the masking region covers at least the entirety of the element of interest as displayed. Accordingly, the total area or volume of the (respectively) 2D or 3D masking region is equal to or greater than the total projected area or volume of the element of interest.

The masking region may be characterized by its dimensions, shape and position on the display. The dimensions and shape can be set by defining the contour of the masking region. A contour is a curve along a boundary of an element, so the contour is made up by a plurality of points.

In one example, the method may comprise tracing the contour of the element of interest and the contour of the masking region may substantially correspond to or coincide with the contour of the element of interest. The contour of the element of interest may be identified in the images taken by the image-recording device, by means of edge detection, object recognition and/or other techniques in the field. Alternatively, in case the element of interest is selected via a user input by tracing its contour, as mentioned above, the contour may have been already identified. In other words, the steps of receiving the user input and tracing the contour may coincide, in that the portable device uses the user input to obtain the contour of the element of interest.

The coordinates of the points (with reference to the coordinate system of the AR system) may be stored in the data storage, once the contour of the element of interest has been traced, and, then, be used to define the contour of the masking region. Accordingly, a shape and a dimension of the masking region may be determined, which coincide with or substantially match the shape and dimension of the element of interest. In other words, the masking region follows the outline of the element of interest.

In another example, the method may comprise identifying visual discontinuities in the 3D environment and the contour of the masking region may be chosen to correspond to one or more of the identified visual discontinuities. In particular, the visual discontinuities may be borders between different items of the 3D environment or different zones within one item, characterized by different colours, texture and so on. The visual discontinuities of the 3D environment may appear as boundaries between areas of different brightness in the pictures captured by the image-recording device and be identified e.g. by means of edge detection techniques. The visual discontinuities may also be thought of as curves and stored as plurality of points' coordinates.

At least some of the identified visual discontinuities may be suitable for defining the masking region, in that the visual discontinuities surround the element of interest. Accordingly, a masking region covering the element of interest and an area immediately adjacent to it may be defined. The suitable visual discontinuities may be selected on the basis of one or more predefined criteria, such as their distance from the element of interest, their shape (e.g. substantially straight lines), their thickness, their sharpness and so on. Thus, when defining the masking region, its contour can be chosen to coincide with one or more of the identified suitable visual discontinuities. In the case of a plurality of visual discontinuities, this means that the contour is given by the union of the points of each visual discontinuity (e.g. the four sides of a square tile).

The contour of the element of interest, as described above, may, in some cases, be a subset of the identified visual discontinuities. The two examples may be combined, in that the method may implement one approach or the other based on the specific environment and element of interest. The situational awareness could be implemented using artificial intelligence techniques.

At an abstract level the two approaches are equivalent, whereas the differences between the two approaches are mainly in the areas of the quality of the visual effect achieved in the AR visualization and the computational load involved.

The difference in visual effect will depend on the impact of the transition from the real world image to the camouflaging virtual content. The degree of seamlessness in the combination of the camouflaging virtual content and the real-world images is mainly affected by two factors: the choice of the contour of the masking region and the choice of the texture map assigned to the masking region, which will be discussed below.

With regard to the contour, when the masking region (substantially) coincides with the element of interest, the transition can be made smoother by filtering, blurring, or other image processing techniques at the boundary. In the other approach, the impact of the transition can be mitigated by choosing a contour where the visual discrepancy is reduced. For example, for patterned surfaces, by choosing the contour of the masking region to coincide with existing features of the pattern, the transition from real world image to virtual content can be made less conspicuous.

Regarding computational loading, there may be an additional computation load associated with tracing a complex boundary as the point of view (e.g. the position of the portable device) changes. For example, if the element of interest were a cup, the projection of the handle of the cup would require continuously updating the outline and regenerating the masking region. Thus, depending on the element of interest, in some situations it may be computationally more efficient to choose visual discontinuities that undergo no or little changes when the perspective of the visualization is modified.

A further approach to those illustrated above may be to assign a bounding box, such as a rectangle, a parallelepiped, a cube, a cylinder etc., that fully contains the element of interest. In other words, the bounding box must be equal to or larger than the element of interest in all dimensions. The bounding box may also be set based on the user input for selecting the element of interest. Similarly to the visual discontinuities approach, this approach may involve a reduced computational load in comparison to tracing the boundaries. Indeed, in both cases, the masking region can be more easily updated.

In addition to the contour, the masking region is defined by its position, wherein the position at which the virtual content will be displayed is determined with respect to the 3D model. In the case of the camouflaging virtual content, the position of the masking region has to correspond to the position of the element of interest. The position of the masking region may be set e.g. by anchoring the masking region to the 3D model, as conventionally done in AR systems, and/or by identifying reference points. The reference points may be selected in the background image and their positions in the 3D model coordinate system may be determined and stored. The masking region may then be aligned with the reference points (e.g. if the masking region is a square, there may be four reference points and the vertices of the square may be aligned with those).

In some examples, the position and the contour may be defined separately from each other, in any given order. In other examples, the position and the contour may be defined concurrently, in the sense that the problem of defining the masking region has to be solved for both variables simultaneously.

To summarize, a masking region is defined by determining its contour and position, which are such that the masking region fully encompasses the element of interest. The characteristics of the masking region may be stored in the data storage. The masking region may have fixed characteristics that are only determined once in the process or one or more of the characteristics may be dynamically adjusted during the augmented visualization, in particular when the viewing angle of the portable device changes.

The method further comprises assigning a texture map (or surface texture) to the masking region. The camouflaging virtual content is the masking region with its assigned texture map. The texture map is an image applied to the surface of a shape in the context of computer-generated graphics. Usually, the texture map is two-dimensional and it may be a bitmap image or a procedural texture. The texture map determines the appearance of the masking region in the augmented visualization and may be chosen so as to camouflage the element of interest.

The camouflaging virtual content may match the area surrounding the masking region in the displayed modified visualization, so that it appears as if the element of interest did not exist at all. In other words, the modified visualization substantially corresponds to what the 3D environment would look like without the element of interest in it. The camouflaging virtual content has basically a pure subtractive function, in that it "removes" real content from the visualization of the 3D environment. For example, if the element of interest is a ball on a tiled floor, the masking region may have the shape and texture of a tile so that, when the camouflaging virtual content is applied to the visualization of the 3D environment, the tiled floor would appear empty, i.e. without the ball.

Therefore the masking region, in particular its contours, and the texture map are such that the boundary between the camouflaging virtual content and the visualization of the 3D environment is substantially undetectable by the human eye. In other words, the overall appearance of the modified visualization comprising the real content (i.e. the visualization of the 3D environment) and the virtual content is homogeneous and a user operating the portable device considers the augmented visualization to be convincing in terms of realistic effect: the removal of the element of interest is substantially unnoticeable. The application of the camouflaging virtual content to the visualization of the 3D environment is substantially seamless thanks to an appropriate choice of the masking region and its texture.

Exemplarily, assigning the texture map may comprise extracting the texture map from a picture of the three-dimensional environment. A picture may be a stand-alone or a "still frame", i.e. a picture belonging to a plurality of pictures that compose a video. For example, if the image-recording device of the portable device is used to sweep the 3D environment, a video may be captured.

Extracting the texture map may comprise picking a colour from the picture and using it for the texture map. For example, if the element of interest is a frame hanging on a wall, the masking region may be a square and the texture map may be extracted by picking the colour of the wall. More generally, extracting the texture map may comprise extrapolating it from the picture. Additionally or alternatively, extracting the texture map may comprise cropping a region of interest from the picture and using the region of interest as the texture map. In particular, the region of interest may be automatically identified by using one or more identification techniques - such as pattern recognition (e.g. of regular, repeating structures), object identification, shape recognition - and/or or by its location.

The picture of the 3D environment may be part of the captured data or part of the visualization of the three-dimensional environment. When the picture is part of the visualization of the three-dimensional environment, the picture corresponds to what is currently being shown on the display.

If the picture belongs to the captured data, there may be more pictures that could serve as basis for extracting the texture map. One specific suitable picture may be identified based on one or more criteria. For example, the picture from which the texture map is extracted may by a picture that shows a part of the 3D environment hidden by the element of interest with the current visualization point of view. Indeed, the picture may have a point of view different from the current visualization point of view and, thus, reveal otherwise blocked areas. In other words, the displayed visualization (at a given instant) may refer to a point of view of the image-recording device of the portable device and the picture of the 3D environment for extracting the texture map may refer to a different point of view of the image-recording device of the portable device.

In this case, the region of interest may be identified based on the position of the element of interest and a specific point of view. The region of interest may be the area of the picture located in correspondence of the element of interest, i.e. showing what is behind the element of interest. Exemplarily, the region of interest may be modified to minimize or eliminate perspective effects, in order to account for the different points of view.

The texture map may be fixed, in that it is only determined once in the process, or assigning the texture map may be a dynamic process, meaning that the texture map is adjusted/modified during the augmented visualization, in particular when the viewing angle of the portable device changes. Accordingly, different texture maps may be assigned to the masking region for different viewing angles.

Once the camouflaging virtual content has been generated, i.e. the masking region has been defined and the texture map has been assigned, the method further comprises modifying the visualization of the three-dimensional environment by applying the camouflaging virtual content to the visualization of the three-dimensional environment by using the three-dimensional model. As explained above, the 3D model is used to correctly position the masking region. The camouflaging virtual content has occlusion class one.

Modifying the visualization means generating augmented image frames by simultaneously recording images of the 3D environment and applying the camouflaging virtual content to the live feed of the captured images.

The method may further comprise modifying the visualization of the three-dimensional environment by applying additional virtual content to the visualization of the three-dimensional environment by using the three-dimensional model. The additional virtual content may be standard virtual content for an AR system, and may in particular have an occlusion class higher than one. For example, the additional virtual content may be a three-dimensional object generated in an external tool and then used by the AR system when creating the AR visualization.

Accordingly, the visualization of the 3D environment may be modified by both the camouflaging virtual content and the additional virtual content, wherein the camouflaging virtual content is configured to occlude only the visualization of the three-dimensional environment and the additional virtual content is configured to occlude the visualization of the three-dimensional environment and the camouflaging virtual content.

The method described herein is performed in real time, which means that the captured data are processed within such a short time frame that the model of the environment is available virtually immediately. Similarly, displaying the visualization of the 3D environment, generating the camouflaging virtual content and applying it take such a short time that the augmented visualization of the 3D environment (i.e. the combination of the 3D environment and the virtual object) is not substantially delayed with respect to a simple (i.e. not augmented) visualization of the 3D environment on the display.

In other words, the different steps of the method are performed so that the speed at which the augmented-reality image frames are generated is comparable to the mere display of the 3D environment as it is. For example, a threshold for the number of frames generated in a given second may be set as a condition for real time, and this condition may be satisfied by the augmented-reality image frames (e.g. 30 frames per second). Additionally or alternatively, a threshold for the time interval between the input (i.e. capturing of the data) and the output (i.e. augmented-reality display) may be set as a condition for real time, such as 10 or 50 or 100 milliseconds.

Since data processing cannot be instantaneous, so that a finite amount of delay between input and output is bound to exist, the expression "near real-time" may also be used with reference to the method.

In some examples, the method may be performed all at once, i.e. creating the 3D model, displaying the visualization of the 3D environment, generating the camouflaging virtual content and modifying the visualization are performed in quick succession. In this case, the time interval between capturing the data and modifying the visualization may satisfy the real-time or near real-time condition, as explained above.

In other examples, the step of creating the 3D model may be performed separately from the subsequent steps of displaying the visualization of the 3D environment, generating the camouflaging virtual content and modifying the visualization. In other words, the step of creating the 3D model may be a preparatory step that can be carried out at any point in time prior to the other steps. In this case, the time interval between capturing the data and modifying the visualization may not satisfy the real-time or near real-time condition. However, the steps of displaying the visualization of the 3D environment, generating the camouflaging virtual content and modifying the visualization are always performed in real-time or near real-time.

The above-described method can remove real content from a displayed scene in real time within a conventional AR system on a portable device by exploiting what is usually considered an issue, namely the occlusion problem.

In one particular embodiment, the captured data comprise pictures of the three-dimensional environment and processing the captured data may comprise:
creating a setting shape that represents the boundaries of the three-dimensional environment;
identifying one or more objects within the three-dimensional environment;
creating one or more object shapes that represent the identified objects;
placing the one or more object shapes within the setting shape;
extracting setting texture map(s) and object texture map(s) from the pictures of the three-dimensional environment;
assigning the setting texture map(s) to the setting shape and the object texture map(s) to the one or more object shapes.

The above steps are performed using the captured data and lead to the creation of a virtual replica of the 3D environment. These steps may be carried out in parallel with the mapping of the 3D environment performed by the AR system as part of the SLAM procedure. In other words, the 3D model may include a SLAM 3D model, also referred to as "basic geometric model", which was discussed already above, and the virtual replica model according to this embodiment. The basic geometric model and the virtual replica model may be merged into a single 3D model, or the 3D model may comprise two separate 3D sub-models, i.e. the basic geometric model and the virtual replica model.

As mentioned, the 3D environment may comprise a setting, such as walls, ceiling and floor, that constitutes the boundaries of the environment. In case of an outdoor environment, artificial boundaries may be set. For example, a cylindrical "room" may be chosen. Exemplarily, a distance at which the detailed modelling of the environment stops may be set. All objects further away than this distance can then be treated as surface textures on the wall of the cylindrical "room". The distance can start at a default value determined during development and be modified on-the-fly depending on what inputs the user provides, for example, which object the user wishes to cloak, i.e. designates as the object to be camouflaged.

These boundaries can be modelled as a shape, for example as a parallelepiped in the case of a conventional room or any other shape depending on the specific environment (e.g. a cylinder for the interior of a tower). The one or more objects present in the 3D environment may be identified by means of object identification techniques and may also be represented by shapes, at least in a first approximation. The object shapes may be primitive shapes or more complex ones. The setting shape and the object shapes may be modelled using techniques like constructive solid geometry, box modelling, polygon mesh etcetera. The term "shape" used in the contexts "setting shape" and "object shape" encompasses solids, shells and frames. A solid is a model that defines the volume of the element being modelled, a shell is a model that defines the surface of the element being modelled and a frame is a model that defines the essential structure of the element.

Based on the captured data, e.g. on depth data, each object shape is assigned to a location within the setting shape, which represents a virtual copy of the environment boundaries. In particular, the object shapes are placed at the correct spatial position and with the correct spatial orientation, wherein "correct" means corresponding to the arrangement of the objects in the real 3D environment. In other words, the setting shape and the objects shapes therein, provided with setting and object texture maps (see below), form a virtual replica of the 3D environment.

The setting texture maps and object texture maps may be assigned to the setting shape and the object shapes by extracting them from the pictures of the 3D environment. This can be accomplished as already explained with reference to the texture map for the masking region. One or more setting texture maps may be defined for the setting shape, e.g. one for the floor, one for the walls and one for the ceiling, or just one for all. One object texture map may be assigned to each object shape.

If the virtual replica has been created as illustrated for this particular embodiment, the texture map for the masking region may coincide with one or a combination of more of the setting and/or object texture maps. In this case, the texture map may be assigned to the masking region simply by selecting one or more already created setting and/or object texture maps. Specifically, the texture map for the masking region may be obtained by using the contours of the masking region to crop an area of the virtual replica at the location corresponding to the element of interest.

According to the above particular embodiment, a 3D model (the virtual replica) of a 3D environment may be efficiently created in real time by the portable device. Typical approaches in scene modelling involve off-line processing of image and range data to create highly accurate models of an environment. The present invention leverages the capabilities of an AR system in order to simplify the modelling task so that it can be performed in real time on a standard handheld device.

The method may further comprise storing the virtual replica in the data storage. The virtual replica may be used by the AR system on the portable device to generate replacing virtual content in a manner analogous to the generation of the camouflaging virtual content.

The replacing virtual content may also belong to the first occlusion class like the camouflaging virtual content, but it may be used to replace a (real) element of interest with a new (virtual) element. Accordingly, the replacing virtual content does not only hide real content, but it adds virtual content. Thus, the replacing virtual content has both a subtractive and an additive function, which result in a swapping function, i.e. the visualization of the 3D environment is modified by removing real content and substituting it with virtual content.

For example, if the element of interest is the setting of a first room (walls, floor...) and objects within it (e.g. bookshelves) with the exception of a couch, the masking region may be three-dimensional, with an outline complementary to the couch and a shape given by the setting shape and the object shapes. The texture map for the masking region is given by the combination of setting and object texture maps, which define the features of the room (e.g. TV set, lamp etc.), except for the couch. The modified visualization would then show the couch in the second room.

The generation of the replacing virtual content may be independent from the generation of the camouflaging virtual content. Accordingly, a computer-implemented method for modifying a visualization of a second three-dimensional environment on a display of a portable device by adding virtual content is provided. The method comprises performing, by the portable device, the following steps:
- creating a first three-dimensional model of a first three-dimensional environment by:
   -- capturing first data about the first three-dimensional environment using one or more capturing devices, wherein the captured first data comprise pictures of the three-dimensional environment; based on the captured first data:
   -- creating a setting shape that represents the boundaries of the three-dimensional environment;
   -- identifying one or more objects within the three-dimensional environment;
   - creating one or more object shapes that represent the identified objects;
   -- placing the object shapes within the setting shape;
   -- extracting object texture maps from the pictures of the three-dimensional environment;
   -- assigning the object texture maps to the object shapes;
- storing the first three-dimensional model;
- creating a second three-dimensional model of the second three-dimensional environment by:
   -- capturing second data about the second three-dimensional environment using one or more capturing devices;
   -- processing the captured second data to create the second three-dimensional model;

   - displaying the visualization of the second three-dimensional environment on the display;
   - generating replacing virtual content for an element of interest of the second three-dimensional environment by:
      -- defining a masking region that covers at least the entirety of the element of interest as displayed;
      - filling the masking region with the first three-dimensional model;
   - modifying the visualization of the second three-dimensional environment by applying the replacing virtual content to the visualization of the second three-dimensional environment by using the second three-dimensional model.

The methods described herein are carried out on the portable device independently from any other device.

Another aspect of the present invention relates to the portable device. The portable device comprises:
a display;
one or more capturing devices configured to capture data about a three-dimensional environment;
a processing unit configured to:
   - create a three-dimensional model of the three-dimensional environment by:
      -- capturing data about the three-dimensional environment using one or more capturing devices;
      -- processing the captured data to create the three-dimensional model;
   - display the visualization of the three-dimensional environment on the display;
   - generate camouflaging virtual content for an element of interest of the three-dimensional environment by:
      -- defining a masking region that covers at least the entirety of the element of interest as displayed;
      -- assigning a texture map to the masking region;
   - modify the visualization of the three-dimensional environment by applying the camouflaging virtual content to the visualization of the three-dimensional environment by using the three-dimensional model;
   wherein:
   the masking region and the texture map are such that, in the modified visualization of the three-dimensional environment, a boundary between the camouflaging virtual content and the visualization of the three-dimensional environment is substantially undetectable by the human eye.

The processing unit may be further configured to carry out some or all of the features of the method as described above.

The subject matter described in this disclosure can be implemented as a method and/or on a device, possibly in the form of one or more computer programs (e.g., computer program products). Such computer programs may cause a data processing apparatus to perform one or more operations as described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a machine (computer) readable medium.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to define further embodiments.
Figure 1 shows a schematic representation of different layers of a displayed scene in an AR system according to the prior art.
Figure 2 shows a schematic representation of an exemplary environment.
Figure 3 shows a schematic representation of different layers of a displayed scene in an AR system according to the present disclosure.
Figure 4 shows a flowchart of an exemplary processing for modifying a visualization of a three-dimensional environment on a display of a portable device by adding virtual content.
Figure 5 shows an exemplary functional block diagram of the portable device according to the present disclosure.

### Detailed Description

In the following, a detailed description of examples will be given with reference to the drawings. It should be understood that various modifications to the examples may be made. Unless explicitly indicated otherwise, elements of one example may be combined and used in other examples to form new examples.

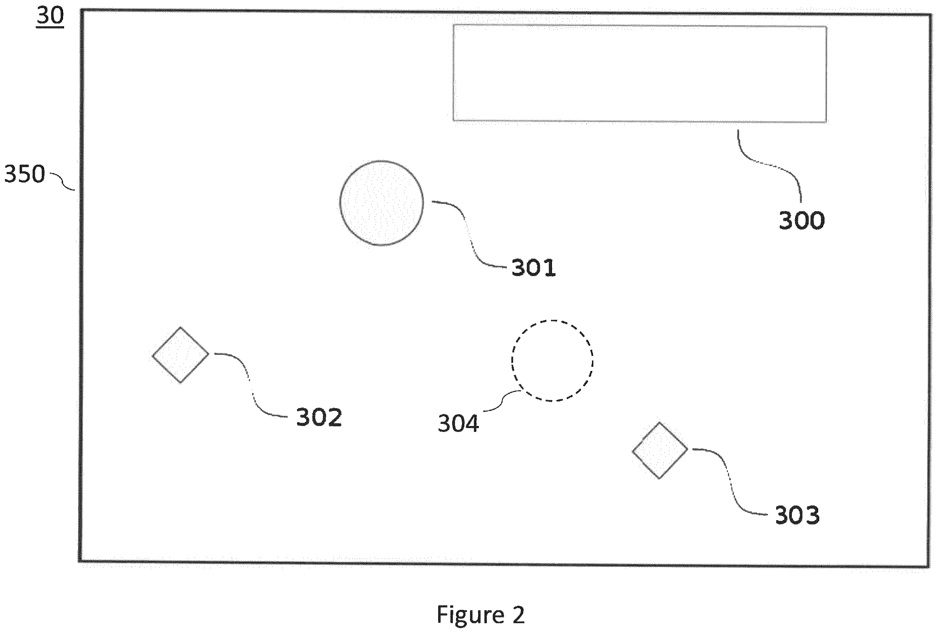

**Figure 2** shows a schematic representation of an exemplary environment 30. The 3D environment 30 is a room and comprises a setting 350 given by the walls, the ceiling and the floor as well as objects 300 and 301 within the setting. The objects 300, 301 may be pieces of furniture, household items, toys and so on. It is understood that the composition of the 3D environment may take many different forms. For example, the number of the objects provided in the environment may be more than or less than that shown in Fig. 2. Further, the locations of the objects may be different than the locations of objects 300 and 301. Also the setting 350 of the room may have a different configuration, e.g. the corners between each pair of walls may not be right angles.

The 3D environment 30 may be observed from different points of view within the environment, such as from a position 302 and/or from a position 303. In particular, a user may hold a portable device while being situated at any of a plurality of possible positions within the environment. The portable device may comprise an AR system and the user would like to use the AR system on their portable device in order to visualize what the 3D environment 30 would look like if something were modified.

For example, the user would like to evaluate the appearance of the room if a new object 304 (e.g. a chair) were placed in it. With the present technology, a new chair can be evaluated in AR by downloading a model of the chair with a suitable app (for example, the IKEA Place App). When used in an empty room, the user can position the virtual chair at any position and orientation on the floor of the room, and the illusion that the virtual chair is present in the room succeeds to a high degree. However, when the room is already furnished, the existing furniture spoils the illusion because it is visible around and behind the virtual content. For example, if the user is at 303, existing object 301 may be strangely superimposed with virtual object 304 in the displayed AR visualization on the portable device, thereby spoiling the illusion.

The present disclosure leverages the capabilities of existing AR systems to make real objects within an environment "disappear" without making the disappearance noticeable. The resulting effect is similar to effects that can be created using off-line video editing and special effects software in which a before and after frame comparison or a green screen procedure is used to make an object disappear from a video stream. However, the present invention provides a methodology for achieving this effect in real time using a standard portable device, specifically by exploiting the occlusion problem.

In particular, classes of virtual content may be defined and, correspondingly, additional layers may be added to the conventional display layer stack shown in Fig. 1. The first step is to define different types of virtual content in terms of the intended purpose regarding occlusion. For example, a simple system could define two types or classes for the virtual content: virtual content that occludes only the background image and virtual content that occludes any object depending on 3D position. Any number of classes for the virtual content may be defined, as appropriate for the needs of a specific application and/or the needs of the underlying AR system.

There may be *n* occlusion classes, wherein class zero refers to the background, i.e. the real content. The classes 1 to *n*-1 are used for virtual content, wherein the virtual content in the *(i*+*1)-th* class is set to occlude all the content belonging to the classes zero to *i,* depending on the 3D position (for *i* that goes from 0 to *n* - 2), and the virtual content in the first class occludes only the background.

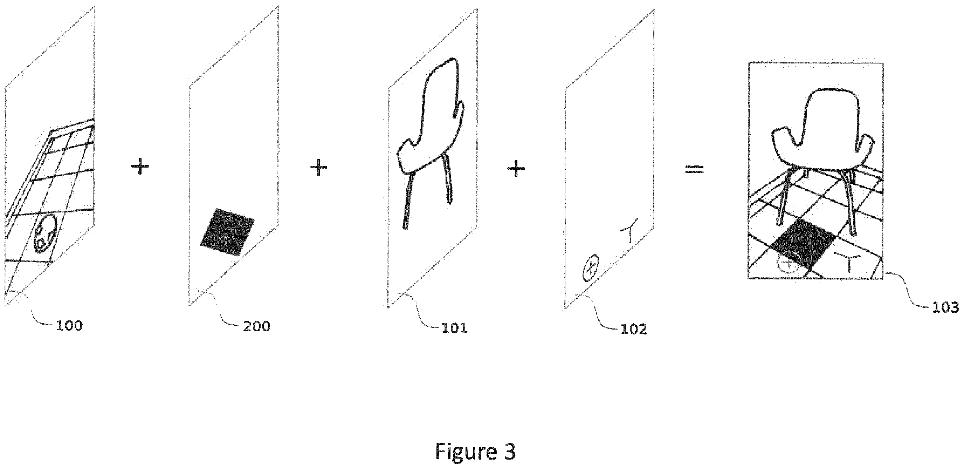

For each class of virtual content, the layer structure should be modified with a corresponding display layer for the display of the given class. This allows different logic to be used regarding the composition of the individual layers. A modified version of the simplified display layer stack of Figure 1 that reflects these considerations is shown in **Figure 3****.** The additional layer 200 is for the display of the virtual content that should only occlude the background image, i.e. virtual content in the first occlusion class. Layer 101 is instead for virtual content in the second occlusion class.

The layer stack is merely a conceptual way of illustrating an AR visualization. An actual implementation may or may not involve separate layers. The essence is that the virtual content is divided into different classes as to its purpose and managed accordingly by the system.

The two exemplary classes of virtual content (class 1 and class 2) may be understood as follows. Virtual content that occludes only the background image (class 1) may be used for creating overlays that have the purpose of being superimposed on a part of the background image and completely covering some feature of the background image so that it is no longer visible. This type of virtual content does not need to be a complex 3D model, instead a 2D region is often sufficient. This 2D region may be of any shape: a quadrilateral, ellipsoid, or any form of polygon. In other cases, a 3D region such as a bounding-box can be used. This type of content will be used as a type of mask in the display stack, as explained below, and it is referred to as camouflaging virtual content.

Virtual content that occludes any object depending on 3D position is the standard virtual content in present state-of-the-art AR systems. It is typically a 3D model that is designed in an external tool and rendered at run-time by the AR system. This type of content is referred to as additional virtual content.

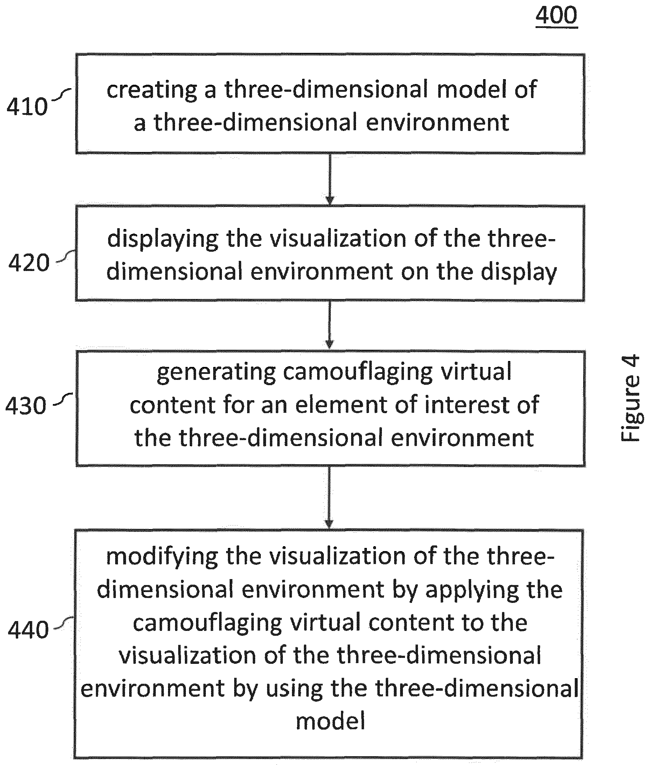

**Figure 4** shows a flowchart of an exemplary processing 400 for modifying a visualization of a three-dimensional environment on a display of a portable device by adding virtual content that includes at least camouflaging virtual content.

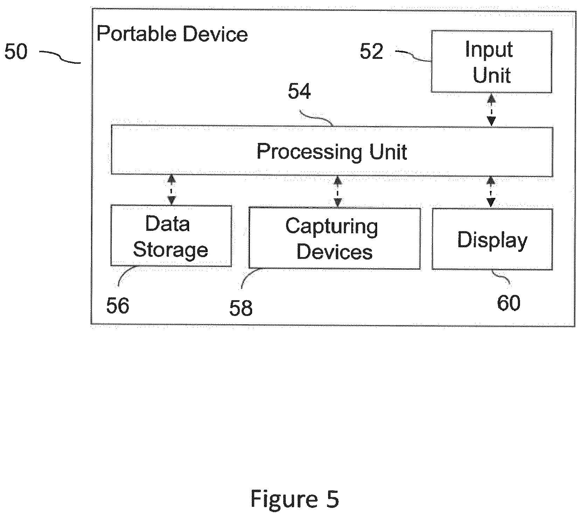

The processing will be discussed in the context of two examples, also with reference to **Figure 5****,** which shows an exemplary functional block diagram of the portable device 50 according to the present disclosure. The portable device 50 comprises an input unit 52, a processing unit 54, a data storage 56, one or more capturing devices 58 (including a camera and inertial sensors such as accelerometers and/or gyroscopes) and a display 60. The portable device 50 may comprise further elements not shown, such as a communication unit for interfacing with a network.

### Example 1

In this example, the environment is a room with a tiled floor and comprises an object, which is a ball standing on the tiled floor. According to the method 400, the ball can be hidden or cloaked in an AR visualization of the environment shown on a display of a portable device 50 including the AR system.

The method 400 comprises creating a three-dimensional model of the three-dimensional environment at 410. In particular, the step of creating the 3D model comprises capturing data about the three-dimensional environment using one or more capturing devices 58 and processing the captured data to create the three-dimensional model. The capturing devices 58 include a camera and one or more sensors. SLAM techniques or alternative techniques are used to process the captured data by the processing unit 54 and map the room to create its 3D model while keeping track of the position of the portable device 50 within it. The 3D model is defined in the coordinate system of the AR system and it is a basic geometric model.

Then, at 420, the visualization of the 3D environment is displayed on the display 60. This means that the camera of the portable device is activated to record the room and the images captured by the camera are fed to the display 60 via the processing unit 54.

At 430 the method 400 comprises generating camouflaging virtual content for an element of interest of the three-dimensional environment. The element of interest is indicated by the user of the portable device by tapping on it and then e.g. an objection recognition algorithm is applied to identify the element of interest. In this case, the element of interest is the ball. The camouflaging virtual content is generated by defining a masking region that covers at least the entirety of the element of interest as displayed and assigning a texture map to the masking region.

Any 2D or 3D region that completely covers the ball could be chosen, for example a 2D region of rectangular shape. In order to define the size of the rectangular shape, visual discontinuities in the three-dimensional environment are identified, wherein the contour of the masking region is chosen to correspond to one or more of the identified visual discontinuities.

Specifically, the contour of the 2D region is defined as matching the borders of a floor tile, which is recognized by means of edge detection techniques. Further, a texture map is assigned to the masking region. By defining a surface texture that is "environmentally relevant", the ball is not only obscured, but disappears from the display of the portable device without a significant indication that it is being hidden. In other words, the masking region and the texture map are such that, in the modified visualization of the three-dimensional environment, a boundary between the camouflaging virtual content and the visualization of the three-dimensional environment is substantially undetectable by the human eye.

An "environmentally relevant" texture map is one that is taken from information in the existing background image to somehow match the environment and create the illusion of disappearance. In this example, assigning the texture map comprises extracting the texture map from a picture of the three-dimensional environment, in particular cropping a region of interest from the picture and using the region of interest as the texture map. Specifically the texture map is obtained by extracting a region of the background image that shows a floor tile near to the tile on which the ball is standing. This cropped image, following some image processing, can be applied as the surface texture or texture map of the 2D region (i.e. the masking region). The masking region with its texture map constitutes the camouflaging virtual content.

Finally, at 440, the visualization of the three-dimensional environment is modified by applying the camouflaging virtual content to the visualization of the three-dimensional environment by using the three-dimensional model. The 3D model is necessary in order to correctly place and orient the masking region on top of the element of interest.

The virtual object is placed on top of the background image in the AR system's 3D coordinate system. In this case "placing" refers to a process of defining the position of the 2D region in relation to the 3D coordinate system of the AR system. This step ensures that, as the user moves around, the 2D region will stay in the correct position (this is sometimes referred to as "anchoring" the virtual content).

In a conventional AR system, a virtual vase, for example, can be placed on a table by anchoring it to the 3D plane identified by the AR system for the surface of the table. The plane has an anchor defined during its creation and this anchor has a position given by the coordinates (Xa, Ya, Za). When the vase is anchored to the plane, the vase coordinates are defined by (Xa + Xv, Ya, Za + Zv). As the vase y coordinate is ensured to be the same as the plane y coordinate, the vase is "anchored" to the plane.

However, there are inaccuracies in the plane definition that can become visible. In the example of the vase, the illusion works well for high angles, but when the viewing angle becomes close to parallel to the table top, the vase appears to float above the table. A more refined way to place the masking region in the AR scene at the correct location is to select visually relevant points in the background image and to determine their positions in the AR coordinate system. These points are then used to fix or "index" the orientation of the masking region to the background image (this is referred to as "indexing"). Visually relevant points are points that are comparatively easier to detect in the image due to their characteristics, such as colour or brightness. The visually relevant points may be points that can be identified with a degree of confidence higher than a given threshold or points that can be identified within an interval of time lower than a given threshold. In particular, the visually relevant points may be points that are striking or eye-catching for human beings, such as discontinuities, pattern boundaries, colour changes, depth discontinuities, edges, shape vertices, etc. By using such "human" relevant points, it is possible to generate a more convincing merging effect between the real world and the camouflaging virtual content. Visually relevant points may be detected using image processing and/or artificial intelligence techniques.

For the purpose of this example, the corners of the real tile on which the ball is located are taken as visual reference points or indexing points. The 3D coordinates of these points in the AR coordinate system and their relative positions and orientations are calculated. These quantities are then used to align the 3D orientation of the 2D region to the AR coordinate system. The result is camouflaging virtual content that is displayed exactly on top of the tile on which the ball is standing. At this point, the ball is no longer visible on the display of the AR system due to the occlusion of the background by the 2D region.

Accordingly, indexing mitigates the problems of anchoring by identifying relevant points that are then used to cyclically update the position of the camouflaging virtual content. In the ball example, without indexing, as the user changes the point of view, the virtual tile begins to be displaced with respect to the grid of the real world tiles, which degrades the illusion. Anchoring and indexing may be used in combination.

Displaying this 2D region as virtual content in the display window of the AR system produces a realistic appearance matching the real floor tiles. In this way, a cloaking effect has been achieved: the ball is not visible on the display 60 and it is not immediately obvious that it has been hidden by the placement of the camouflaging virtual content.

The modified visualization achieved in Example 1 may suffer from some limitations that may affect the quality of the illusion of disappearance. These include:
- The limitations of the underlying AR system, in terms of the accuracy of the SLAM process that is used to map the environment. In some AR systems the coordinate system is updated as the AR system receives additional information. Furthermore, some systems have accuracy limitations, that can result in a shift of virtual content position when the viewing position of the mobile device is significantly changed. To a certain extent, these limitations can be overcome by cyclically evaluating the indexing points in relation to the background image and updating the position of the 2D region as appropriate.
- The limitations of the underlying rendering engine and lighting sub-systems. As the surface texture of the 2D region is taken directly from the background image, it is possible to achieve a very high quality camouflage effect. However, the quality of the illusion depends on ensuring equivalent processing of the virtual content and the background image in the AR scene. The quality of the inferred environmental lighting used when rendering the virtual content becomes a critical factor in achieving a high quality illusion.
- The limitation at extreme viewing angles. This limitation is due to the definition of the 2D region chosen. As the ball is a 3D object, at an extreme viewing angle (device position close to the floor), the top of the ball becomes visible when it extends outside the defined 2D area. This issue can be addressed by dynamically adjusting the size of the masking region that covers the background image in order to ensure that the object to be hidden remains obscured by the masking region. In the example discussed above, the masking region may be extended to include a second virtual tile in order to maintain the illusion of disappearance.

Further, Example 1 refers to a specific type of environment comprising a pattern, the tiled floor, and a specific type of object with a relatively simple outline, the ball, to be cloaked. However, the method 400 may also be used for a more general environment and a more general element of interest, as illustrated with reference to Example 2 below.

### Example 2

In this example, the environment 30 is a room that, with reference to Figure 2, comprises a bookshelf 300 and a floor lamp 301. According to the method 400, the floor lamp can be hidden or cloaked in an AR visualization of the environment shown on a display of a portable device 50 including the AR system. If the user is positioned at position 302 and would like to make the floor lamp 301 disappear from the display of the AR scene, it is not possible to create a relevant texture map from the present camera frame, because the bookshelf does not have a simple, patterned structure like the tiled floor and this frame does not provide an unobscured view of the bookshelf 300. Indeed, the lamp is between the camera and the bookshelf 300.

The method starts at 410 with creating a three-dimensional model of the three-dimensional environment by processing the captured data. In this example, the 3D model is a virtual replica model and not just a basic geometric model. The virtual replica model may be extracted using a combination of the existing geometries (planes, etc.) extracted from the point cloud by the AR system and by using image recognition techniques to identify objects (table, sofa, etc.), which can then be modeled based on predefined parametric models.

Specifically, creating the virtual replica model involves creating a setting shape that represents the boundaries of the three-dimensional environment; identifying one or more objects within the three-dimensional environment; creating one or more object shapes that represent the identified objects; placing the object shapes within the setting shape; extracting setting texture maps and object texture maps from the pictures of the three-dimensional environment; and assigning the setting texture maps to the setting shape and the object texture maps to the object shapes. These steps will be discussed in more detail in the following.

A 3D object that represents the boundaries of the room is created. The model of the room may be created by using a basic parametric model (such as a cube shape) that is adjusted dynamically according to the observed dimensions of the room. Further, the room model may be positioned to have the same position and orientation as the real room within the coordinate system of the AR system. This can be done, for example, by exactly locating a corner of the real room within the 3D coordinate space and then using this corner as an indexing point to position the virtual copy of the room.

Then, the size and position of real objects within the room are identified. It is not necessary to have a precise knowledge of what each object is, but rather information about the size, shape, and position of the object within the room. An iterative approach to detailing the contents of the model may be employed, in which the larger objects are modelled first and more detailed models are constructed for specific areas of interest. In this example, if the user wishes to make the lamp disappear, it is not necessary to have a detailed 3D model of every book and ornament on the bookshelf.

Subsequently, 3D virtual objects are created for the identified real objects. For many use cases, these models do not need to model the geometry of the real object exactly. Instead the models can be simpler with an appropriate surface texture. For example, the bookshelf of Figure 2 can be modelled (at least initially) as a 3D box. The created object shapes are then placed at the correct spatial position and orientation within the setting shape.

For each object, and for the setting (walls, ceiling, and floor) of the room, camera frames that show "optimal" images of that object are identified. Here, "optimal" is defined by suitability for the purpose of creating a texture map. For example, camera frames that show the object from a near perpendicular point of view are generally better than frames from an oblique point of view. Frames that show the object wholly unobscured are better than frames in which the object is obscured. Accordingly, one or more features of the camera frames may be compared to one or more requirements in order to identify those camera frames complying with the requirements, i.e. the "optimal" camera frames.

A region of interest is extracted from the camera frame. The region of interest is the region of the image that is relevant to the element of interest that is presently being considered. The extraction can be done by identifying the element of interest (such as a wall or the lamp) in the camera frame and cropping the region from the frame. The identification of the region of interest can be achieved using a number of techniques, including image processing techniques such as line and shape recognition, application of depth maps from a depth sensor, and application of machine-learning-based object identification. In many cases, a combination of these techniques will yield improved results.

The cropped region of interest may be corrected to take into account the position of the object and the position and orientation of the camera for the given camera frame. For example, a perspective correction filter may be applied to the extracted image. In this way, the camouflaging virtual content will provide a good approximation of reality when projected through the AR system from any viewing position. Then, the corrected region of interests are assigned as texture maps to the respective setting shape or object shapes.

As a further improvement, it is possible to extend the definition of an optimal image to mean "optimal from a given viewing angle". In this case, different camera frames are selected for different viewing angles and the region of interest is extracted from each of them, in order to create a database of "best" images for each object and part of the setting in the room. The assigning of the texture map is then made dependent on the present viewing angle in the visualization, in that the texture map is chosen to be the region of interest extracted from a picture with a viewing angle equal or similar to the present viewing angle.

This detailed 3D model of the room is stored in a data storage 56. The creation of this detailed 3D model can be performed in parallel with the standard 3D model of the environment that is created by the underlying AR system as part of the SLAM procedure.

The method proceeds at 420 with displaying the visualization of the three-dimensional environment on the display 60.

At 430, camouflaging virtual content for an element of interest of the three-dimensional environment is generated. First, a masking region that covers at least the entirety of the element of interest as displayed is defined. In the camera frame of the current visualization, the object that the user designates to be cloaked is identified, in this case the lamp, and a 3D masking region in the form of a bounding box is assigned to this object. The bounding box does not need to be an exact fit, but it must be larger than the relevant object in all dimensions.

The outline of the bounding box constitutes the contour of the masking region that will make the lamp disappear. The size and shape of the masking region will change dynamically as the viewing angle of the portable device changes, so the masking region creation is done at the relevant frame rate of the display.

A texture map is then assigned to the masking region. In particular, this can be achieved as follows. A view is created from the detailed 3D model of the room, in which the designated object to be cloaked has been removed. For example, the 3D model of the object to be cloaked can be simply set to "not visible" rather than actually being deleted from the model. This modified detailed 3D model of the room is then rendered to a 2D display layer. Because the detailed 3D model of the room has been aligned to the real world room, the position of the mobile device camera is used as the position of a virtual camera for rendering. This results in a 2D display image that closely matches the display of the real world environment on the mobile device screen, but is without the designated object. This display layer is not shown to the user in its entirety, rather only the area corresponding to the masking region. Indeed, the masking region is used to crop the 2D image from the 2D display layer of the 3D model of the room. This cropped image shows what is "behind" the bounding box defined. In the context of the example, the cropped image shows what is "behind" the lamp. The cropped image obtained by applied the masking region to the 2D display layer is the texture map.

At 440 the visualization of the three-dimensional environment is modified by applying the camouflaging virtual content to the visualization of the three-dimensional environment. As the room model has been aligned to the real world room, a view of the 3D model taken from the same point of view as the camera of the mobile device will align well with the display of the underlying AR system. It is then sufficient to display the masking region with the texture map extracted from the 3D model at the location in which the 2D image has been cropped. Accordingly, the 3D model is used to position the camouflaging virtual content in the visualization of the three-dimensional environment. In the context of this example, the bounding box must be placed in the same position as the lamp. Indexing points can be defined similarly to the manner described in the context of Example 1.

As a result, the masking region with the texture map is applied as an overlay on the background image. This effectively covers the designated object (the lamp) with an image that matches the rest of the environment and generates the cloaking effect for the designated object. In other words, the masking region and the texture map are such that, in the modified visualization of the three-dimensional environment, a boundary between the camouflaging virtual content and the visualization of the three-dimensional environment is substantially undetectable by the human eye.

Even when there is a high quality surface texture as illustrated above, i.e. obtained by cropping a detailed 3D model of the environment, the discontinuities between the image inside the masking region and outside the masking region may still be noticeable in certain cases. For this reason the above procedure can be extended by specific steps to reduce discontinuities at the borders of the masking region, for example by performing realignment, stretching, and/or filtering of the cropped image in order to provide a smooth transition at the boundaries between the camouflaging virtual content and the real scene.

In particular, the indexing step may be modified as follows. The display image of the modified visualization and the masking region comprising the cropped image of the 3D model of the room may include visually relevant points along the boundary of the masking region. For example, if the lamp post covers part of the floor and part of the wall, the transition between the wall and the floor may be a critical point for which the alignment of the virtual replica model may not be sufficiently exact. Two visually relevant points may be identified, one at each end of the segment of the transition line between the floor and the wall that is hidden by the lamp.

The identified visually relevant points can be used to improve the alignment of the two images. This can be done by applying stretching, scaling, rotating, translating, or other filters to the images. Exemplarily, only the image of the 3D model of the room that is inside the bounding box may be manipulated. An alternative approach is to use visually relevant points to refine the scale and orientation of the 3D model prior to cropping the 2D projected image of the 3D model for use as a surface texture. In some cases a combination of these two approaches may be used. Further, a colour filtering may be applied to reduce the impact of variations in coloration between the inside and outside images.

The method 400 illustrated with reference to Example 2 comprise different ways of obtaining the texture map and of indexing the masking region with respect to Example 1, as well as a step of creating a detailed 3D model that is in addition to a conventional 3D model created in AR systems.

The camouflaging effect of the camouflaging virtual content may be further improved by taking the following into consideration:
- Handling of shadows: When extracting texture maps, the texture taken from the video frame will often have darker regions due to the shadows cast by objects within the environment. This can lead to visual discrepancies when hiding an object, because the shadow of that object may still be visible. This can be overcome by analysing the optimal images of an object and use these images to determine a homogeneous surface texture for the object, e.g. by using artificial intelligence. This means that the shadows are removed from the surface textures within the 3D model. The effect of shadows can be recreated within the model by applying the environmental lighting that is made available by the underlying AR system. These "virtual" shadows will then be automatically updated when the designated object is hidden. To summarize, real world shadows could reduce the illusion of disappearance if an object disappears but its shadow does not. A further processing step in which the real world shadows of the object of interest are identified and the masking region is extended to include the shadows provides an enhanced illusion.
- Handling unknown regions: When extracting textures for a real world object, there will often be "unknown" regions because there is no camera frame that shows the surface of an object within that region. For example, a bookshelf against a wall occludes the region of the wall behind the bookshelf, and there is no video frame that shows an unobstructed view. In these situations, it is sufficient to create a virtual surface texture by extrapolation of the surface texture of the wall in regions that are not occluded. The fact that this virtual surface texture may be different from the real surface texture behind the bookshelf is not important because the user will not see the difference. In order to provide a good illusion, creating a best guess of the unknown region based on the known regions of the same surface (in this case the wall) provides a convincing effect. If there is not information for a given region on other areas of the same surface, it is possible to base a best guess on information from similar surfaces within the environment, such as other walls.

One method for achieving this is to extend the concept of a parametric model to include properties for surface textures. For example a wall may have a main texture, a baseboard (or skirting-board) texture, and optional textures for elements such as a window or a ventilation grating. By associating textures with the properties, it is possible to more accurately model the entire surface of the wall without the existence of video frames that show the entire area of the wall surface. The AR system may then identify the relevant properties and associate these with the correct textures of the 3D model. For example, if a wall is identified with image recognition, it may be determined whether the wall has a baseboard. If not, no baseboard is displayed, if yes, baseboard textures are retrieved and associated to the baseboard property of the wall. If it is not possible to determine whether the wall has a baseboard from the available frames, other walls in the room may be considered. A database of parametric models for items (e.g. walls, tables, chairs, sofas, lamps, etc.) that can typically be expected within a user's environment may be relied upon. For objects that are not covered by these parametric models, a more intensive 3D scanning approach can be used to create the related model.
- Handling complex objects: Some standard objects, such a plants, represent very complex 3D objects and are difficult to model in detail. In many cases, it is not necessary to model these objects in detail. Instead, a close-fitting bounding box can be defined around the object, and textures can be defined for the surface of the bounding box using a depth masking approach. Using image and depth data, the areas of the image determined to be part of the object based on depth from the camera can be extracted and used to create a texture. By applying transparency to the other regions of the bounding box surface, a simplified model of the object can be created. In order to improve the visual effect, multiple images from multiple viewing angles can be used in combination with adjusting the bounding box orientation, so that a "near straight on" view of the modelled object can be presented in most cases to the user.

The creation of a detailed 3D model as described above can also be used for cloaking everything in the environment except for one object. An example of such a use case is when someone is shopping for furniture. If a sofa is on display in the furniture store, the real environment is the display hall of the furniture shop. If the virtual model of the 3D room described above is saved, this model can be used at a later time point to create a virtual environment that is used to cloak most of the real environment. The visual effect is to show the user the real world sofa correctly within a virtual model of the user's room environment. As before, the AR system has the ability to "hide" existing objects in the 3D model. For example a real-world new sofa can be shown correctly by hiding the preexisting old sofa in the 3D model.

To summarize, the present disclosure encompasses different exemplary implementations related to the generation of camouflaging virtual content. In some cases, the camouflaging virtual content is used to obscure real world objects in the camera image used as the background of the display in an AR system. The surface textures of the dynamically created virtual content are environmentally relevant images that are dynamically extracted from the stream of camera images in real time. In other cases, the masked region is overlaid with an image from a dynamically generated 3D model of the environment. The surface textures of the dynamically created 3D model of the environment are dynamically extracted from the stream of camera images in real time. The view that is used to replace the element of interest is generated by choosing a viewing angle of a virtual camera in the model that is exactly the same as that of the camera in the user's device in the real environment. In yet other cases, a combination of the two previous concepts is applied. Further, the 3D model of the environment may be saved to some type of non-volatile storage in order to be used at a later time.

The methodology disclosed herein provides AR systems with new capabilities, and these capabilities can lead to new types of AR applications. Possible application examples comprise but are not limited to the following. One application could be a home planning app that, in addition to allowing the user to see a potential new sofa in their living space, also allows the user to rearrange the existing furniture in the living space. The same app could be used to produce an AR experience in which the already generated 3D model of the room can be saved and used as a virtual environment when the user is looking at a new item of furniture in the real world, such as when shopping for a new sofa at a furniture store. In this use case, the real content (the new sofa) is displayed in the virtual model of the room. Another application could be a video editing app that captures the AR data instead of a direct video stream, and uses these data for later offline video editing and special effects.

## Claims

1. A computer-implemented method for modifying a visualization of a three-dimensional environment on a display of a portable device by adding virtual content, the method comprising performing, by the portable device, the following steps:
- creating a three-dimensional model of the three-dimensional environment by:
-- capturing data about the three-dimensional environment using one or more capturing devices;
-- processing the captured data to create the three-dimensional model;
- displaying the visualization of the three-dimensional environment on the display;
- generating camouflaging virtual content for an element of interest of the three-dimensional environment by:
-- defining a masking region that covers at least the entirety of the element of interest as displayed;
-- assigning a texture map to the masking region;
- modifying the visualization of the three-dimensional environment by applying the camouflaging virtual content to the visualization of the three-dimensional environment by using the three-dimensional model;
wherein:
the masking region and the texture map are such that, in the modified visualization of the three-dimensional environment, a boundary between the camouflaging virtual content and the visualization of the three-dimensional environment is substantially undetectable by the human eye.

2. The method of claim 1, wherein assigning the texture map comprises extracting the texture map from a picture of the three-dimensional environment.

3. The method of claim 2, wherein extracting the texture map comprises:
cropping a region of interest from the picture;
using the region of interest as the texture map.

4. The method of any one of claims 1 to 3, wherein defining the masking region comprises tracing a contour of the element of interest, wherein a contour of the masking region substantially corresponds to the contour of the element of interest.

5. The method of any one of claims 1 to 3, wherein defining the masking region comprises identifying visual discontinuities in the three-dimensional environment, wherein a contour of the masking region is chosen to correspond to one or more of the identified visual discontinuities.

6. The method of any one of the preceding claims further comprising receiving a user input that selects the element of interest.

7. The method of any one of the preceding claims, wherein the captured data comprise pictures of the three-dimensional environment and processing the captured data to create the three-dimensional model comprises:
creating a setting shape that represents the boundaries of the three-dimensional environment;
identifying one or more objects within the three-dimensional environment;
creating one or more object shapes that represent the identified objects;
placing the one or more object shapes within the setting shapes;
extracting setting texture map(s) and object texture map(s) from the pictures of the three-dimensional environment;
assigning the setting texture map(s) to the setting shape and the object texture map(s) to the one or more object shapes.

8. The method of any one of the preceding claims further comprising modifying the visualization of the three-dimensional environment by applying additional virtual content to the visualization of the three-dimensional environment by using the three-dimensional model, wherein:
the camouflaging virtual content is configured to occlude only the visualization of the three-dimensional environment; and
the additional virtual content is configured to occlude the visualization of the three-dimensional environment and the camouflaging virtual content.

9. A computer program product comprising computer-readable instructions, which, when executed by a computer, cause the computer to carry out the method of any one of the preceding claims.

10. A portable device comprising:
a display;
one or more capturing devices configured to capture data about a three-dimensional environment;
a processing unit configured to:
- create a three-dimensional model of the three-dimensional environment by:
-- capturing data about the three-dimensional environment using one or more capturing devices;
-- processing the captured data to create the three-dimensional model;
- display the visualization of the three-dimensional environment on the display;
- generate camouflaging virtual content for an element of interest of the three-dimensional environment by:
- defining a masking region that covers at least the entirety of the element of interest as displayed;
-- assigning a texture map to the masking region;
- modify the visualization of the three-dimensional environment by applying the camouflaging virtual content to the visualization of the three-dimensional environment by using the three-dimensional model;
wherein:
the masking region and the texture map are such that, in the modified visualization of the three-dimensional environment, a boundary between the camouflaging virtual content and the visualization of the three-dimensional environment is substantially undetectable by the human eye.

11. The portable device of claim 10, wherein the processing unit is further configured, when assigning the texture map, to extract the texture map from a picture of the three-dimensional environment, and
wherein the processing unit is optionally further configured, when extracting the texture map, to:
crop a region of interest from the picture;
use the region of interest as the texture map.

12. The portable device of claim 10 or 11, wherein the processing unit is further configured, when defining the masking region, to:
trace a contour of the element of interest, wherein a contour of the masking region substantially corresponds to the contour of the element of interest,
and/or to:
identify visual discontinuities in the three-dimensional environment, wherein a contour of the masking region is chosen to correspond to one or more of the identified visual discontinuities.

13. The portable device of any one of claims 10 to 12, wherein the portable device further comprises an input unit and the input unit is configured to receive a user input that selects the element of interest.

14. The portable device of any one of claims 10 to 13, wherein the captured data comprise pictures of the three-dimensional environment and the processing unit is further configured, when processing the captured data to create the three-dimensional model, to:
create a three-dimensional shape that represents the boundaries of the three-dimensional environment;
identify one or more objects within the three-dimensional environment;
create one or more object shapes that represent the identified objects;
place the one or more object shapes within the setting shape;
extract setting texture map(s) and object texture map(s) from the pictures of the three-dimensional environment;
assign the setting texture map(s) to the setting shape and the object texture map(s) to the one or more object shapes.

15. The portable device of any one of claims 10 to 14, wherein the processing unit is further configured to modify the visualization of the three-dimensional environment by applying additional virtual content to the visualization of the three-dimensional environment by using the three-dimensional model, wherein:
the camouflaging virtual content is configured to occlude only the visualization of the three-dimensional environment; and
the additional virtual content is configured to occlude the visualization of the three-dimensional environment and the camouflaging virtual content.
